# EUROPEAN PATENT APPLICATION

(11) **EP 3 681 185 A1**
(43) Date of publication of application: **15.07.2020**
(21) Application number: 17926443.7
(22) Date of filing: 29.09.2017
(51) Int. Cl.: H04W 12/06

(54) **COMMUNICATION SERVER AND METHOD FOR SECURE AUTHENTICATION AND IDENTIFICATION OF A DEVICE WITH AN INTERNET PLATFORM**

(71) Applicant: Telefonica Digital España, S.L.U., 28013 Madrid (ES)
(72) Inventor: LOPEZ NAVARRO, Antonio José, 28013 Madrid (ES); LAURENT, Arsene, 28013 Madrid (ES); GARCÍA PUGA, Javier, 28013 Madrid (ES); RIVERA, Jorge Antonio, 28013 Madrid (ES); RODRÍGUEZ PÉREZ, José, 28013 Madrid (ES)
(74) Representative: Carlos Hernando, Borja
(86) International application number: PCT/ES2017/070640
(87) International publication number: WO 2019/063855

(57) **Abstract**

The invention relates to a communication server and method for secure authentication and identification of a device with an internet platform. The method comprises the following steps carried out by a communication server (200): receiving, from a device (100), a request to establish a connection with at least one internet platform (300), wherein said device (100) gathers information from a physical object; obtaining an IP address of the device (100) and validating same by returning an identifier of the device (100); extracting network information from the device (100); extracting client credentials on the internet platform (300); and sending said credentials to the device (100) in order for the latter to said said information gathered from the physical object to the internet platform (300) or sending, using said credentials and the identifier of the device (100), the information gathered from the physical object, together with the network information obtained, to the internet platform (300).

## Description

### TECHNICAL FIELD

The present invention relates generally to the secure authentication and identification of devices. Particularly, the present invention provides a communication server and method for secure the authentication and identification of a device with respect to an internet platform, using the network capabilities of a mobile communication operator. The invention also provides capabilities for routing data to different internet platforms without having to make changes in the firmware of the devices. Additionally, the present invention also offers an intermediate debugging point which allows guaranteeing where there is an integration or operation problem and the capability of enriching data sent by the device with information known by the network.

### BACKGROUND OF THE INVENTION

The present invention is based on the concept of "Edge Computing" (described in the paper published by IEEE with INSPEC Accession Number: 14916986) by means of the processing of data acquired by devices, particularly loT devices, in an intermediate step, in terms of network, with respect to an internet platform or loT platform.

loT imposes a communication model that relies heavily on cloud computing (described in the paper published by IEEE with INSPEC Accession Number: 14986379) due to the relatively low processing and storage capability of the final devices in some cases and for the purpose of simplifying the configuration, increasing usability, and making the most of user ubiquity in a technological approach that tends to become more accessible in other cases.

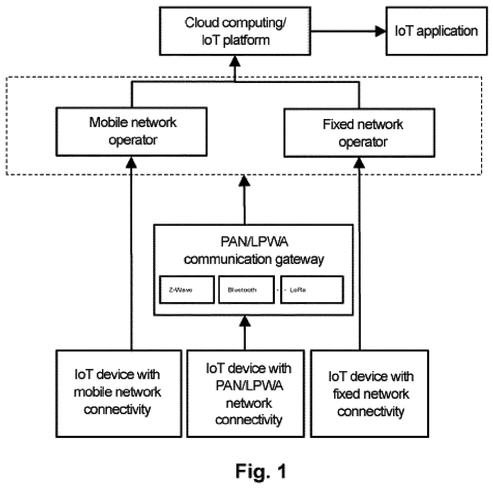

Figure 1 shows a basic diagram of a cloud computing-based architecture.

Some challenges arise as this trend very rapidly fills communication networks with loT devices. The state of the art with respect to some of the most significant challenges is described below.

### Capability

The exhaustion of the address space in the IPv4 scheme is an example that any limit can be exceeded. Although precautions were taken with IPv6 so that it would be harder to exceed the limit, the solution to the problem, at least the one most widely used, consisted of the translation of private to public addresses and vice versa (NAT). In this scheme, an intermediary node of the network is responsible for pre-processing IP traffic headers to alleviate the pressure on the demand and subsequent allocation of the increasingly scarce universe of available addresses.

### Availability

The Internet works by applying, in layers, several services in the "best effort" mode, i.e., without any guarantees regarding the level of service, so it is not 100% stable or reliable in terms of transport. This means that loT devices will inevitably come into situations in which they will lose connectivity with the internet platform. A fog computing-based architecture allows each loT device to cope with this situation. Providing data treatment at the edge allows making the solution more resilient.

### Confidentiality

Historically, this need has been a barrier for entering cloud-based services.

### Integrity

Implementing any intermediation system requires verifying that data integrity is maintained in the event of data loss or possible unwanted data modification. In this case, trust would be placed in the mobile operator and can be verified using end-to-end checking mechanisms or Blockchain-based mechanisms.

### Interoperability

Flexibility when selecting different deployments of systems, network, components, internet platforms, etc. is critical for the sustainability of any loT solution, so it is important for implementations to be based on architectures and open standards. The OpenFog Consortium was thereby created with the mission of developing and building a reference architecture which allows making the most of the possibilities offered by this computational paradigm.

The invention solves, among others, the following problems:
- Current problems in identity provision and device authentication mechanisms:
   The best practices in loT security applied to devices indicate the need to have individual credentials for each device, so that if a certain credential is compromised at any time, it will not put the integrity of the rest of the devices deployed in the field at risk.
   The main methods used today are in line with the methods used on the Internet, mainly symmetric encryption (by means of shared secrets or passwords) or asymmetric encryption (by means of using X.509 certificates), all under a secure transport layer such as TLS.
   The provision of these identities (shared password or digital certificate) in the different devices is a complicated process that is often carried out by means of a particularization of the firmware of each device or a manual provision. This process ultimately translates into an increase in costs, both of the device (more powerful HW capable of securely storing credentials and implementing TLS algorithms is required) and in manufacturing (step for the individual customization for each device to provide the individual credential).
   Moreover, identity management is often carried out in the loT platform, for example, by revoking device credentials. This assures that the device has no access to the platform, but in no case prevents the possibility of connecting to the mobile network and of it transmitting continuously without control.
- Problems relating to computing, energy, and data consumption related to device authentication mechanisms:
   As we see in the preceding section, the main methods used today are in line with the methods used on the Internet, such as the TLS transport layer with X.509 certificates for authentication, for example.
   The implementation of these security mechanisms has a strong impact on device design and development:
      - Impact on computational capability. The implementation of SSL or TLS type security algorithms, including password management, requires the device to be more complex and powerful, since it is necessary to execute these processes that are usually rather intensive in the use of CPU and memory.
      - Impact on data transmission. Before initiating a transmission of "useful" data, a series of dialogues (handshakes) in charge of securing communication by means of mutual authentication must be carried out. In a typical case of TLS v.1.2 with X.509 certificates, handshake of this type may require the transmission of 7 Kbytes of data, regardless of the useful payload that is to be transmitted subsequently. For example, if only the data of a temperature in the json format ("{temp: 35}") is to be sent subsequently, a ratio of 10/(7^{∗}1024)=0.001 useful message vs. total message size would be taken into account.
      - Impact on energy consumption. Both the execution of algorithms of a certain complexity (e.g., TLS) and the wireless transmission of data have a strong impact on the energy consumption of the device.
- Current problems in internet platform integration:
   A typical architecture for developing a loT solution generally consists of connecting the devices to an internet platform which facilitates the integration of the devices, providing device and data management services.
   Since standardization of protocols (including payload) is not available today, this type of integrations may present a series of drawbacks:
      - In many cases, internet platforms are not capable of offering information on whether the devices are sending data to an incorrect endpoint or have errors in connection establishment. This hinders the process of integrating devices in said platforms.
      - The possible need for migration between an internet platform of one provider to another is a complex process involving the provision of new credentials for each device and the implementation of a new integration with the protocols available on that platform.
- Problems relating to the complexity, size, and cost of loT devices:
   loT solutions typically address needs in a mass market, hence the total cost of the solution, and therefore the degree of market penetration, largely depends on the cost of loT devices. Similarly, the objects that are connected usually have a limited space for the components that will add connectivity and local processing, which imposes limitations on the components to be selected since each independent functionality (GeoLocation module, Clock, etc.) usually takes up space and adds an incremental cost to the solution.
- Problems relating to the management and maintenance of loT devices:
   The cardinality and simplicity (by design) of loT devices in a solution usually represents a major challenge with respect to the management and maintenance of said devices. It is normal to find solutions in which the firmware is immutable or very difficult to update and therefore complicated and even impossible to correct errors therein or add new functionalities due to the difficulty involved in carrying out remote updates. Sending a technician to perform the work on each device or having the solution operator brings or sends the device to a support center or performs the update unassisted is usually unfeasible (very expensive and impractical).

### DISCLOSURE OF THE INVENTION

Aspects of the present invention provide a method for secure the authentication and identification of a device, such as an loT device, with respect to an internet platform, preferably housed in the cloud. The method comprises:
a) a communication server receiving, from the mentioned device, a request to establish a connection with the mentioned internet platform, wherein the device, which includes a mobile communication module, is associated with a client of the communication server by means of a unique identifier of a SIM card, and gathers information from a physical object acquired by one or more sensors, and wherein the communication server is operatively connected with the internet platform;
b) the communication server obtaining an IP address of said device and validating that said IP address is allocated to the client in the communication server, returning an identifier of the device if the validation is correct;
c) the communication server extracting network information from the device based on the IP address;
d) the communication server extracting client credentials on the internet platform; and
e1) the communication server sending the credentials to the device in order for the latter to send said information gathered from the physical object to the internet platform, wherein the credentials are used for authenticating the device with respect to the internet platform; or
e2) the communication server sending the information gathered from the physical object together with the network information obtained in step c) to the internet platform using said credentials and the identifier of the device.

In one embodiment, the request received by the communication server is to establish a connection with a plurality of internet platforms, wherein the method comprises in step e) extracting the client credentials used in each of said plurality of internet platforms; and carrying out step e2) simultaneously for each of the plurality of internet platforms.

In one embodiment, the method further comprises the communication server receiving, from the device, a request to establish a connection with another internet platform; and carrying out step e2) for the another internet platform.

In one embodiment, step c) further comprises adding the extracted network information to the information gathered from the physical object.

In yet another embodiment, the communication server receives, prior to step a), a text message including a one-time password (or token) with a private numbering allocated to the communication server and an identifier of said client, and validates the origin and the client of the text message. If the origin corresponds to the client, the communication server obtains the credentials of the internet platform and temporarily stores them associated with the one-time password and the client identifier, such that the request of step a) in this case further includes the one-time password and the client identifier. The communication server returns the stored credentials if the one-time password and the client identifier that are received in the request coincide with the one-time password and the client identifier that are associated with the stored credentials or alternatively sends an error message to the device if they do not coincide.

The mentioned error message may comprise an indication that the authentication of the device is valid but the credentials are not yet available or an indication that the authentication of the device is not valid.

According to the present invention, the network information extracted in step c) may include: the unique identifier of the SIM card of the device, an international identity number of the client (IMSI), an international identity number of the device, such as the IMEI number or the MSISDN number, the brand and/or model of the device, a network-based location of the device, etc.

Aspects of the present invention also provide a communication server for secure the authentication and identification of a device with respect to an internet platform. The proposed communication server comprises:
an authentication module configured for obtaining, once a request to establish a connection with at least one internet platform has been received from a device, preferably an loT device, an IP address of said device and validating that the IP address is allocated to a client of the communication server, wherein the device gathers information from a physical object acquired by one or more sensors;
a connectivity management module configured for verifying, using the IP address, that the device is a legitimate device and for returning an identifier of the device if the device is a legitimate device;
a data enrichment module configured for extracting network information from the device based on the IP address;
a credential repository configured for storing client credentials in the internet platform; and
a protocol adapter module configured for extracting said client credentials and for sending them to the device in order for the latter to send said information gathered from the physical object to the internet platform or to send, using the credentials and the identifier of the device, the information gathered from the physical object together with the network information that is obtained to the internet platform.

In one embodiment, the mentioned protocol adapter module is modular and configured to allow connecting the device with a plurality of internet platforms.

The present invention allows obtaining a lower cost in the development of the end-2-end solution. As a result of the simplification of the provisioning processes, eliminating the need to distribute individual credentials to each device, the invention allows all the devices to share the same firmware and it is not necessary to particularize them.

Likewise, the invention consumes less data as it is not necessary to establish an additional secure transport layer between the devices and server, since the one provided by the mobile network is used, thereby avoiding the need to implement the SSL/TLS handshake, and a lower power consumption, which means a longer battery life of the device, since encryption algorithms (SSL/TLS) do not have to be executed and the number of wirelessly sent data is reduced.

Finally, the invention also allows reducing the number of security errors. Since the provider of the loT solution does not have to carry out many of the critical processes for the security of the solution (e.g., identity bootstrapping, choosing authentication token or rotating credentials), a poor configuration which compromises the solution is less likely to occur.

### BRIEF DESCRIPTION OF THE DRAWINGS

The foregoing and other features and advantages will be more clearly understood based on the following detailed description of several merely illustrative, non-limiting embodiments in reference to the attached drawings, in which:
Figure 1 schematically shows a cloud computing-based architecture.
Figure 2 schematically shows the elements of the communication server for secure the authentication and identification of a device with respect to an internet platform, according to a first embodiment of the present invention.
Figure 3 schematically shows the architecture used by the proposed communication server and method according to a second embodiment of the present invention.
Figure 4 schematically shows the architecture used by the proposed communication server and method according to a third embodiment of the present invention.

### DETAILED DESCRIPTION OF THE INVENTION AND EMBODIMENTS

The present invention provides secure authentication and identification of loT devices 100 for being connected to an internet platforms, or loT platforms, 300 generally located in the cloud, using the network capabilities of a mobile communication operator.

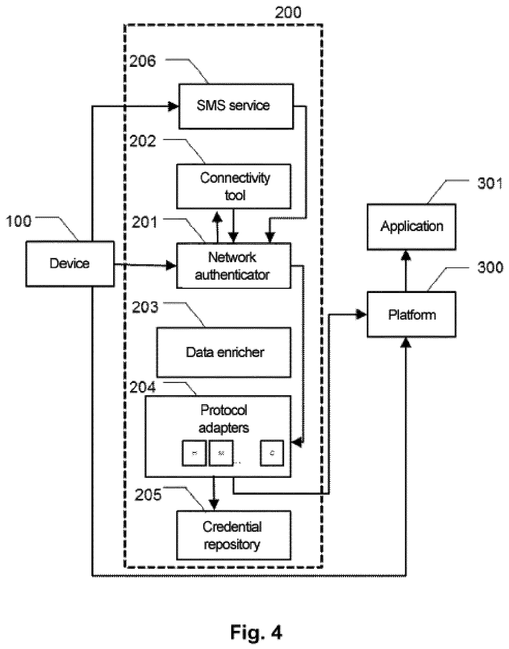

Within the typical loT architecture using the model proposed in Recommendation ITU-T Y.2060, Figure 4, as a reference model, the present invention is located in the network layer, within network capabilities, serving as a link with service support and application support layer.

The invention offers three main functionalities:
- Routing of information to different internet platforms 300: the invention provides a routing point through a communication server 200 to different internet platforms 300. It therefore allows the user to carry out a single simple integration given that the devices 100 are authenticated by means of the information available in the network and credential provision is not required.
- Management of authentication credentials of internet platforms 300: the invention allows managing, outside the device 100, the authentication credentials with the internet platform 300, such that all the devices 100 cam share the same factory firmware and manual identity provision processes are not required.
- Enrichment of information with network information: the invention allows enriching the information the device 100 provides in the internet platform 300 with network information such as ICCID, MSISDN, or IMEI of the device 100.
   - Routing of information to different internet platforms:
      Currently, from the design phase, the software of the device 100 selects the internet platform 300 to which it sends data and fixes both the destination server and the credentials that it must use with it. This situation limits the possibility of migration between providers of internet platforms 300, since despite using common protocols (MQTT, HTTP), they use different authentication methods that make it impossible for the provider of an loT solution to migrate between platforms without having that significantly modify the firmware of all its devices. Since they do not support the possibility of integration with most internet platforms 300 in the device 100, Only loT solutions based on non-IP LPWA connectivity such as SIGFOX or LORA offer in the infrastructure of the communication operator the possibility of routing the data to one platform or another. However, for loT solutions using 2G, 3G, 4G cellular connectivity and having IP connectivity, there is no mechanism in the infrastructure of the communication operator to select the destination loT platform.
      In contrast, the invention allows the loT solution provider to integrate its devices 100 only with the communication server 200. From here onwards, the loT solution provider can use a management interface of the communication server 200 to enable routing the information of its devices 100 to the intended internet platform 300. To that end, the devices 100 must use a standard protocol (MQTT, HTTP) but without having to use specific credentials of the destination internet platform 300. Therefore, the loT solution provider can select one or more destination internet platforms 300 it desires, without having to make any changes to the software of its devices 100. Additionally, the incorporation of new internet platforms 300 or changes in the current platforms will also be carried out centrally without the need for changes in the devices.
   - Management of authentication credentials of internet platforms:
      Today, the credentials of the devices 100 must be managed by the loT solution provider interacting directly on the devices 100. This identity management involves various design decisions and management operations that the solution provider must perform including, among others,:
         - Generation of an identity token: the internet platforms 300 often leave the generation of the identity token which allows authenticating a device 100 in the hands of the loT solution provider. This token can be a shared secret, a temporary token derived from a shared secret, or an X.509 certificate. Not all organizations have the knowledge and processes to securely generate and manage these identity tokens. This can cause these tokens to be predictable, not securely managed, and can be filtered or even common to the entire device base.
         - Provision of the identity token: the distribution of these identity tokens is another delicate process that is outside the scope of internet platforms 300 and entails a critical design decision for the loT solution provider. This often leads to the identity token being manually provided in the device 100, stored therein in an unsafe manner or even kept in a permanent storage which does not allow its rotation in the event that it is suspected or known that the token Identity has been compromised.
      Additionally, it is possible that due to the limitations of technical resources in the device 100, a secure procedure for the generation and provision of these identity tokens in the device 100 is not supported, making it impossible to securely manage this identity even if the organization has the resources and the knowledge to do same.
      To that end, the invention allows the loT solution provider to not to have to undertake the processes of generating and providing the identity token, not only reducing the effort dedicated to these operations of interaction with the device 100 but also avoiding security risks associated with an insecure execution thereof. The solution provider does not have to generate an identity token for each device 100 that is dependent on the destination internet platform 300 because the identity in the cellular network of the device 100 is used.
      When a device 100 connects to the cellular network and establishes a data context to have IP connectivity, the GGSN of the cellular network allocates an IP address thereto. The communication provider knows at all times the identity in the cellular network (MSISDN, IMSI), the identity of the device used (IMEI), and the identity of the SIM card used (ICCD) for this data context. Therefore, based on the original IP address of the device 100, the communication provider can know the network identity of the device 100 and therefore translate same into the suitable identity in the destination internet platform 300 selected by the loT solution provider. To carry out this translation, the communications server 200 must have access to the signaling information of the network as well as the connection credentials with the destination internet platform 300 which allows managing the identities of the devices 100.
      It is important to highlight that the invention is not vulnerable to IP spoofing techniques given that in a cellular network the GGSN, even if a device 100 modifies its IP address and sends the packets with a different address from the one that has been allocated, will never send the packets back to the malicious device 100. The use of protocols which require connection (HTTP, MQTT) is considered at all times, so the handshake phase cannot be completed in the case of IP spoofing.
   - Enrichment of information with network information:
      Often times, it is necessary to know network information such as ICCID of the SIM card, IMSI, IMEI of the device 100, brand and model of the device 100, or network-based location of the device. This information can be useful for identifying the physical device that is connected and, for example, for performing security verifications preventing a SIM card from being inserted into an unauthorized device 100. Currently, the devices 100 must incorporate, if necessary for the application, information about the cellular network and the network parameters of the device 100. This implies communication between the device software and the communication module, which is not always easy to obtain.

The invention allows the loT solution provider to not have to undertake development in the software of the device 100 necessary for obtaining this information from the communication module. Additionally, the sending of this information from the device 100 involves additional data, and therefore battery, consumption that is not necessary as a result of the invention. This improvement is particularly interesting if the network information must be used to obtain the final information, for example, in the case of resolving the location, the LAC and CelllD which the communications module knows must be used and an additional service from a third party must be consulted to solve same. The very case is necessary when resolving the name of the manufacturer of the module and the model based on the IMEI.

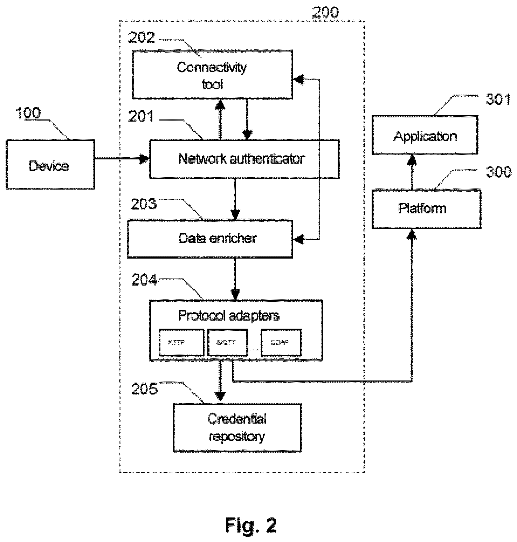

Figure 2 shows a diagram of the different modules of the communication server 200 to allow the secure authentication and identification of a device 100 with respect to an internet platform 300. The communication server 200 consists mainly of:
- A protocol adapter module 204: This element is in charge of making connection with the internet platform 300 and sending the data received from the device 100. It is worth noting that this element absorbs the complexity and evolution of the APIs of the destination platform 300, freeing the device 100 from performing software updates to adapt to same. The main task of which is responsible is to handle the authentication with the destination internet platform 300, therefore if a complex encryption or mutual authentication based on digital X.509 certificates is required, the device 100 does not have to worry about it. This entails a significant reduction in the capability of the hardware resources required in the device 100 and in the consumption of data that the device must send to perform a TLS handshake, for example.

The protocol adapter 204 is capable of changing the destination internet platform 300 in a transparent manner for the device 100, as well as sending the data to several platforms 300 simultaneously with a single sending of information by the device 100.

The design of this module 204 is preferably modular, so it allows connection to different providers of internet platform 300 with different relevant protocols such as HTTP, MQTT, and COAP.

The credentials used in the connection with the internet platform 300 will be taken from a credential repository 205 of the communication server 200.
- A data enrichment module 203: This element is in charge of expanding the information sent by the device 100 with data available in the network such as: ICCID of the SIM card, IMSI, IMEI of the device 100, brand and model of the device 100, or network-based location of the device, etc. This information is available in a connectivity management module 202 and can be consulted from the IP received from the device 100.
- A (network) authentication module 201: This element is in charge of verifying the identity of the device 100 and allowing connection thereof for sending data to the internet platform 300. This element uses the IP received in the request sent by the device 100 and consult connectivity management module 202. Authentication will be successful as long as connectivity management module 202 recognizes the IP of the device 100 as valid for the client.
- Credential repository 205: This element is in charge of maintaining the relationship between the network identity of the device 100 known to the connectivity management module 202 and the identity allocated by the client in the internet platform 300.
- Connectivity management module 202: This element is in charge of managing the life cycle of the connectivity of the device 100 and knowing all the network information related thereto such as: the allocated IP, ICCID of the SIM card, IMSI, IMEI of the device 100, brand and model of the device, or network-based location of the device. It must allow consulting this network information based on the IP address allocated to the device 100.

Moreover, the device 100 is a device of the client of the communication server 200 which is in charge of gathering information of an object to which it is connected (for example, a vehicle, a washing machine, or a locator, among others) from sensors and certain processing capability to send them to the internet platform 300. Additionally, the device 100 can have acting capabilities that allow it to perform certain actions on the connected object, receiving commands from the internet platform 300. The device 100 has a mobile communications module that uses an ICC card as a mechanism for authenticating the client with respect to the network and which is known by the connectivity management module 202 in the process of connecting to same.

In reference to the internet platform 300, this element is responsible for storing the data gathered by the device 100 and offering it to an application 301. This element maintains an identity of the device 100 for which it offers individual credentials which are stored in the credential repository 205. The application 301 is responsible for presenting to the client the information gathered by the device 100 on the internet platform 300 and for generating the commands for acting thereon.

In one embodiment, the flow of sending data from the device 100 to the internet platform 300 is as follows. The device 100 sends a request to the authentication module 201 without any authentication credentials through a mobile or cellular network. The authentication module 201 obtains the IP address of the received request and consults the connectivity management module 202 to validate that said IP address has been allocated by the cellular network to a client device 100. Based on the consulted IP address, the connectivity management module 202 confirms that the request is from a legitimate device 100 and returns an identifier of the device 100 (for example the IMSI of the ICC of the device 100). Otherwise, it will return an error and the request will not advance. The authentication module 201 then advances the request of the device 100 to the data enrichment module 203 and the latter requests from the connectivity management module 202 the available network information of that device 100 such as: the ICCID of the SIM card, IMSI, IMEI of the device, brand and model of the device, or network-based location of the device. The data enricher 203 advances the request of the device 100 enriched with the obtained network information to the protocol adapter module 204 which adapts the request to the destination protocol of the internet platform 300. The protocol adapter module 204 consults the credential repository 205 to obtain the credentials that suit the destination protocol together with the identity of the device 100 in the platform 300. If this information does not exist locally, the adapter module 204 must be able to interact with the internet platform 300 to register the device 100 or retrieve them if it is already registered. The protocol adapter module 204 sends the data of the device 100 together with the network information of the data enrichment module 203 and the suitable credentials to the internet platform 300. Finally, the application 301 retrieves the data from the internet platform 300 and presents it in a way that is suitable for the end user.

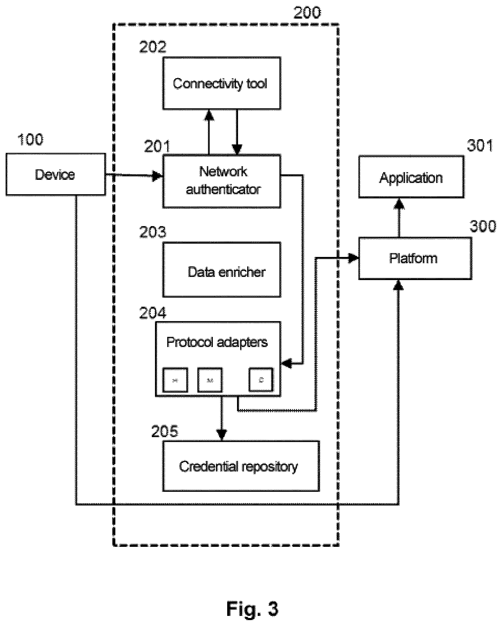

Figure 3 shows a second embodiment of the invention. In this case, the communication server is used as a credential broker. In this embodiment, the device 100 maintains direct connection to the internet platform 300, using a service displayed by the communications server 200 for obtaining the credentials in said internet platform 300 using to that end the identification and authentication provided by the network.

After obtaining and validating the identity and authentication by means of the connectivity module 202 in a manner similar to the preceding embodiment, the authentication module 201 obtains the credentials for said device 100 on the internet platform 300 through the protocol adapter module 204 and provides same to the device 100 for later use. In the event of authentication error in its communication with the platform 300, the device 100 will initiate a new request to the authentication module 201 to renew its credentials. By means of this mechanism, the main objective of the present invention is also achieved, deploying a single factory firmware in all devices 100, and avoiding the subsequent manual installation of the certificates necessary for secure communication with the chosen internet platform 300.

This alternative allows maintaining a direct connection, without intermediate points, between the device 100 and the internet platform 300, which reduces operation complexity. Likewise, the encryption of the communication is implemented end-to-end from the device 100 to the platform 300.

In contrast, as the main drawbacks, the connection of the device 100 with the internet platform 300 requires minimum computing capabilities for the encryption of the communication on the side of the device 100, leaving many low-cost devices 100 used in a wide range of causes of use, such as smart meters, out of range. Likewise, the use of end-to-end encryption from the device 100 requires a higher consumption of mobile bandwidth, as well as a shorter battery life. If the user wants to change the internet platform 300, the device 100 must be reprogrammed with the interface of the new internet platform 300 if standard APIs are not used therein. This alternative does not allow automatically enriching the information sent to the internet platform 300 with network information.

Figure 4 shows a third embodiment of the invention. In this case, the communication server is used as a credential broker with text message authentication. The device 100 continues to maintain the direct connection with the internet platform 300, including in this case the communication server 200 to an SMS service module 206 to identify and authenticate the device 100 prior to obtaining the credentials on the internet platform 300.

In this case, the device 100 sends a text message, preferably an SMS message, through the SMS service module 206 including a temporary one-time token (or one-time use password) as content, as well as an identifier of the client in the connectivity management module 202 and a private numbering (shortcode) allocated to the communications server 200. The use of private and not public numbering is important to prevent SMS spoofing attacks in which, messages from unreliable external networks with the origin of the message modified, may reach the SMS service module 206. In any of the cases, all the mechanisms available in the operator can be put into operation to prevent the arrival of SMS with an unreliable origin at the SMS service module 206. Moreover, the token contained in the SMS message preferably a one-time token that is temporary, with a duration of a few minutes, and has a minimum number of characters to prevent collisions between the requests of different devices 100.

The SMS service module 206 routes the received message (including the content and origin thereof) to the authentication module 201, validating the origin and client in the connectivity management module 202 in a manner similar to the cases described above. If the origin belongs to the client's inventory, it obtains the credentials in the internet platform 300 and the stores temporarily associated with the token generated by the device 100 and the client identifier contained in the SMS message. After an established waiting time, the device 100 makes an HTTPS request for downloading the credentials in the internet platform 300, including in said request the token and the client identifier. If the credentials exist for said pair, they are returned in the HTTPS request. Otherwise, the following error codes may be returned:
∘ Valid authentication process but credentials not yet available: 404 Not Found, or
∘ Invalid authentication process: 403 Forbidden

Similarly to that described in the second embodiment, the device 100, in the event of an authentication error in its communication with the internet platform 300, will initiate a new process for renewing its credentials following the aforementioned steps.

This third embodiment is based on standard functionalities of the mobile network, since it is based on the authentication of the SMS service module 206 instead of the network authentication procedures owned by each operator: identification through the private IP of the device 100 in the cellular network or addition of HTTP headers by transparent proxies.

Likewise, problems with NATs, which in some cases of use can conceal the private IP of the device 100, preventing its identification in the authentication module 201, are eliminated.

Moreover, this embodiment presents some limitations or drawbacks. Validation by means of the SMS service module 206 introduces an asynchronous communication, requiring a variable waiting time prior to the recovery of the credentials by the device 100. This makes it necessary to configure in the device 100 a waiting time greater than that estimated and to program recovery procedures in case the credentials are not available at said time.

Similarly, there is no confirmation to the device 100 of the authentication process initiated with the SMS message. The device 100 can only check the status of the authentication by means of the HTTPS query to the authentication module 201 which will return the credentials thereto when it has finished. Confirmation of the authentication process could be enabled with a return SMS message originated in the authentication module 201 to the device 100, including the token, client identifier, and authentication result as content.

A person skilled in the art would be able to introduce changes and modifications in the described embodiments without departing from the scope of the invention as defined in the attached claims.

## Claims

1. A method for secure the authentication and identification of a device with respect to an internet platform, the method comprises:
a) a communication server (200) receiving, from a device (100), a request to establish a connection with at least one internet platform (300),
wherein said device (100), which includes a mobile communication module, is associated with a client of the communication server (200) by means of a unique identifier of a SIM card inserted in said device (100), and gathers information from a physical object acquired by one or more sensors, and
wherein the communication server (200) is operatively connected with the at least one internet platform (300);
b) the communication server (200) obtaining an IP address of said device (100) and validating that said IP address is allocated to the client in said communication server (200), returning an identifier of the device (100) if the validation is correct;
c) the communication server (200) extracting network information from the device (100) based on the IP address;
d) the communication server (200) extracting client credentials on the internet platform (300); and
e1) the communication server (200) sending said credentials to the device (100) in order for the latter to send said information gathered from the physical object to the internet platform (300), wherein the credentials are used for authenticating the device (100) with respect to the internet platform (300); or
e2) the communication server (200) sending the information gathered from the physical object together with the network information obtained in step c) to the internet platform (300) using said credentials and the identifier of the device (100).

2. The method according to claim 1, wherein the request received by the communication server (200) is to establish a connection with a plurality of internet platforms (300), wherein the method comprises:
extracting the client credentials used in each of said plurality of internet platforms (300) in said step d); and
carrying out said step e2) simultaneously for each of the plurality of internet platforms (300).

3. The method according to claim 1 further comprising:
the communication server (200) receiving, from the device (100), a request to establish a connection with another internet platform (300); and
carrying out said step e2) for the another internet platform (300).

4. The method according to claim 1, wherein step c) further comprises adding the extracted network information to the information gathered from the physical object.

5. The method according to claim 1 further comprising:
the communication server (200) receiving, prior to said step a), a text message including a one-time password with a private numbering allocated to the communication server (200) and an identifier of said client; and
the communication server (200) validating the origin and the client of said text message, wherein if the origin corresponds to said client, the communication server (200) obtains the credentials of the internet platform (300) and temporarily stores them associated with the one-time password and the client identifier,
such that the request of step a) further includes the one-time password and the client identifier, and the communication server (200) returns the stored credentials if the one-time password and the client identifier that are received in the request coincide with the one-time password and the client identifier that are associated with the stored credentials or sends an error message to the device (100) if they do not coincide.

6. The method according to claim 5, wherein the error message comprises:
an indication that the authentication of the device (100) is valid but the credentials are not yet available; or
an indication that the authentication of the device (100) is not valid.

7. The method according to the preceding claims, wherein the network information extracted in step c) includes at least one of: the unique identifier of the SIM card of the device (100), an international identity number of the client, or IMIF or MSISDN number, an international identity number of the device (100), or IMEI number, the brand and/or model of the device (100), or a network-based location of the device (100).

8. The method according to claim 1, wherein the device (100) is an loT device and the internet platform (300) is housed in the cloud.

9. A communication server for secure the authentication and identification of a device with respect to an internet platform, which server comprises:
an authentication module (201) configured for obtaining, once a request to establish a connection with at least one internet platform (300) has been received from a device (100), an IP address of said device (100) and validating that said IP address is allocated to a client of the communication server (200),
wherein said device (100), which includes a mobile communication module, is associated with said client by means of a unique identifier of a SIM card inserted in the device (100), and gathers information from a physical object acquired by one or more sensors;
a connectivity management module (202) configured for verifying, using the IP address, that the device (100) is a legitimate device and for returning an identifier of the device (100) if the device is a legitimate device;
a data enrichment module (203) configured for extracting network information from the device (100) based on the IP address;
a credential repository (205) configured for storing client credentials in the internet platform (300); and
a protocol adapter module (204) configured for extracting said client credentials and for sending them to the device (100) in order for the latter to send said information gathered from the physical object to the internet platform (300) or to send, using said credentials and the identifier of the device (100), information gathered from the physical object together with the network information that is obtained to the internet platform (300).

10. The communication server according to claim 9, wherein said protocol adapter module (204) is modular and configured to allow connecting the device (100) with a plurality of internet platforms (300).

11. The communication server according to claim 9, wherein the extracted network information includes at least one of: the unique identifier of the SIM card of the device (100), an international identity number of the client, or IMIF or MSISDN number, an international identity number of the device (100), or IMEI number, the brand and/or model of the device (100), or a network-based location of the device (100).

12. The communication server according to claims 9 to 11 further comprising a SMS service module (206) configured for receiving a text message including a one-time password with a private numbering allocated to the communication server (200) and an identifier of said client.
